Europäisches Patentamt

European Patent Office

Office européen des brevets

(11) Veröffentlichungsnummer: **0 101 903**
**B1**

(12) **EUROPÄISCHE PATENTSCHRIFT**

(45) Veröffentlichungstag der Patentschrift :
04.03.87

(51) Int. Cl.⁴ : **C 08 L 27/06**

(21) Anmeldenummer : **83107181.6**

(22) Anmeldetag : **22.07.83**

(54) **Formmassen aus Vinylchloridpolymerisat, Pfropfpolymeren und polymeren Weichmachern mit hoher Alterungsbeständigkeit.**

(30) Priorität : **04.08.82 DE 3229079**

(43) Veröffentlichungstag der Anmeldung :
**07.03.84 Patentblatt 84/10**

(45) Bekanntmachung des Hinweises auf die Patenterteilung : **04.03.87 Patentblatt 87/10**

(84) Benannte Vertragsstaaten :
**DE FR GB IT SE**

(56) Entgegenhaltungen :
**FR-A- 2 011 501**
**GB-A- 976 360**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Ott, Karl-Heinz, Dr.**
**Paul-Klee-Strasse 54**
**D-5090 Leverkusen 1 (DE)**
Erfinder : **Lindner, Christian, Dr.**
**Riehlerstrasse 200**
**D-5000 Köln 60 (DE)**
Erfinder : **Uerdingen, Walter, Dr.**
**Humperdinckstrasse 41**
**D-5090 Leverkusen 1 (DE)**
Erfinder : **Braese, Hans-Eberhard**
**Kaethe-Kollwitz-Strasse 3**
**D-5000 Köln 71 (DE)**
Erfinder : **Hurnick, Helmut**
**Bonnerstrasse 5**
**D-5090 Leverkusen 3 (DE)**

## 0 101 903

**Beschreibung**

Die Erfindung betrifft thermoplastische Formmassen zur Herstellung von Folien mit verbessertem Alterungsverhalten auf der Basis von Kompositionen, die Vinylchloridpolymerisate, bestimmte Pfropfpolymerisate, bestimmte harzartige Copolymerzusätze und spezielle kautschukartige Copolymerisate enthalten.

Vinylchloridpolymerisate insbesondere Polyvinylchlorid (PVC) stellen weitverbreitete Rohstoffe zur Herstellung verschiedenster Kunststoffartikel dar. Durch Kombination der Vinylchloridpolymerisate mit anderen Stoffen läßt sich bekannterweise das charakteristische Eigenschaftsprofil der Vinylchloridpolymerisate in weiten Bereichen variieren bzw. modifizieren. So eignen sich z. B. nicht oder nur gering modifiziertes PVC (sogenanntes « Hart-PVC ») zur Herstellung von Formkörpern. Diese Formmassen zeigen ein mittleres Verarbeitungsverhalten, mittlere Wärmeformbeständigkeit bei mäßiger Zähigkeit und relativ niedriger Flexibilität. Durch Kombination von z. B. Polyvinylchlorid mit sogenannten Weichmachern mit niedrigen bzw. mittleren Molekulargewichten lassen sich Kunststoffartikel herstellen (« Weich-PVC-Typen »), die bei Gebrauchstemperaturen hohe Flexibilität und Elastizität besitzen. Als Weichmacher sind hierfür z. B. Phthalate, Epoxidverbindungen, aliphatische Diester, Phosphate, Polyester mit Molekulargewichten bis zu etwa 3 000, Trimellitate, Citrate oder bestimmte aliphatische, gegebenenfalls chlorierte, Kohlenwasserstoffe geeignet. Diese Weichmacher sind bekannt (z. B. « Encyclopedia of PVC », Mariel Dekker, INC, New York, 1976).

Kombinationen aus sogenannten polymeren Weichmachern (Polymeren mit höheren Molekulargewichten) mit Vinylchloridpolymerisaten erlauben weiterhin die Herstellung von Weich-PVC-Formkörpern mit verbesserten mechanischen Eigenschaften, z. B. eine verbesserte Abriebfestigkeit, Elastizität, Lösungsmittelbeständigkeit und gegebenenfalls eine bessere Flammfestigkeit. Solche polymeren Weichmacher sind z. B. teilvernetzte Butadien-Acrylnitril-Copolymerisate mit bis zu 30 % Acrylnitril und Mooney-Viskositäten (ML 4, 100 °C, (DIN 53523) von 60-100 z. B. EP 0 005 736), bestimmte Polyurethane (DE-PS 1 193 241) sowie spezielle, in organischen Lösungsmitteln lösliche Ethylen-Vinylacetat-Copolymerisate (z. B. EP-A 0 005 736).

So sind z. B. aus der FR-A 2 011 501 thermoplastische Polymermischungen auf der Basis PVC bekannt, die einen hohen Kristallinitätsgrad besitzen.

Durch Kombination beispielsweise von Vinylchloridpolymerisaten mit Pfropfpolymeren (z. B. Styrol, α-Methylstyrol, Acrylnitril und/oder Methylmethacrylat, gepfropft auf kautschukartige Substrate wie Butadienpolymerisate, Acrylatkautschuk) oder Pfropfpolymerisaten (Vinylchlorid gepfropft auf spezielle Ethylen-Vinylacetat-Copolymere mit z. B. 45 % Vinylacetat und 55 % Ethylen), oder durch Kombination mit anderen Polyethylenderivaten lassen sich Kunststoffblends hoher Kerbschlagzähigkeit herstellen.

Die Kautschukkomponenten der Pfropfpolymermodifikatoren sind vorzugsweise von anderer Natur (i. Vgl. zu einigen der obengenannten Polymerweichmachern) als die Kautschuke, die als Polymerweichmacher eingesetzt werden können. Diese Unterschiede können z. B. durch chemische Zusammensetzung, den Vernetzungscharakteristiken, der Teilchenmorphologie und mit der Pfropfcharakteristik gegeben sein.

Weiterhin kann durch spezielle Modifikatoren, die Wärmestandfestigkeit von Vinylchloridpolymerisaten verbessert werden. Hierfür geeignete Modifikatoren sind z. B. Copolymere des Styrols, α-Methylstyrols, Acrylnitrils und Methylmethacrylats.

Um eine technische Verarbeitung dieser Vielzahl von Polymerkombinationen zu ermöglichen, ist eine wirksame Stabilisierung der Systeme, z. B. gegen thermischen photolytischen und chemischen Abbau nötig. Als Stabilisatoren und Verarbeitungshilfsmittel eignen sich z. B. Ba/Cd-, Pb-, Sn-, Zn-Stabilisatoren oder organische Stabilisatoren sowie phenolische, gegebenenfalls S- oder P-haltige Antioxidantien, Epoxidverbindungen, Wachse, niedermolekulare und hochmolekulare Gleitmittel. Außerdem sind Additive erforderlich, die die Verarbeitungsbedingungen des jeweiligen Systems optimieren. Solche Hilfsstoffe und deren Verarbeitungsbedingungen werden beispielsweise in « Kunststoff Handbuch » Carl Hanser Verlag, München (1963) beschrieben.

Für spezielle Anwendungen (z. B. als Folie zum Laminieren und Kaschieren) sind Vinylchloridpolymerisate enthaltende Kompositionen mit ganz bestimmtem Anforderungsprofil erforderlich : Kombination von guter Zähigkeit, Bruchfestigkeit, Flexibilität, Elastizität (auch bei tieferen Temperaturen), Wärmestandfestigkeit, Abriebfestigkeit, Haftfestigkeit ; Möglichkeiten der Verarbeitung zu flächenartigen Gebilden durch Extrusion, Kalandrieren, Spritzgießen, Tiefziehen ; Laminierbarkeit mit anderen Materialien. Die Kompositionen sollen außerdem gute Migrationsbeständigkeit, Dimensionsstabilität und spezielle Schrumpfeigenschaften aufweisen. Weiterhin sollen sie eine ästhetische Oberflächenbeschaffenheit besitzen und sich durch spezielle Oberflächenbehandlungsverfahren zu Gebilden mit dekorativem Aussehen verarbeiten lassen. Außerden wird noch eine komfortable Griffeigenschaft solcher Materialien gefordert.

Dieses komplexe Anforderungsprofil kann durch thermoplastische Verarbeitung z. B. folgender Komposition in bestimmten Mengenverhältnissen erhalten werden :

Vinylchloridpolymerisat (z. B. PVC),

Weichmacher mit niedrigem Molekulargewicht (z. B. Dioctyladipat, Phthalate), Pfropfpolymerisat (z. B. ABS-Pfropfpolymere),
Polymerweichmachern (z. B. Butadien-Acrylnitril-Kautschuke) und eine komplexe Zahl von Stabilisatoren für die verschiedenen Komponenten und die Gesamtmischung.

Solche Polymerisatkompositionen besitzen anwendungstechnische Nachteile, welche die Einsatzbreite daraus hergestellter Formkörper (insbesondere als Folien) einschränken. Solche Nachteile sind z. B. unbefriedigende Beständigkeit gegen Alterungseinflüsse durch Licht, Wärme, Chemikalien, sonstigen artfremde Medien sowie chemische Wechselwirkungen der verschiedenen Komponenten miteinander. Diese Alterungen machen sich im Verlust mechanischer und visueller Eigenschaften bemerkbar (Versprödung, Farbtonverschlechterung, Ausschwitzungen etc.).

Es wurde nun gefunden, daß man Folien mit verbesserter Alterungsbeständigkeit aus speziellen thermoplastischen Formmassen herstellen kann, die das obengenannte komplexe anwendungstechnische Anforderungsprofil erfüllen.

Gegenstand der Erfindung sind demnach thermoplastische Formmassen die enthalten :

A) 25-50 Gew.-Teile eines Vinylchloridhomo- oder -copolymerisates mit mindestens 80 Gew.-% Vinylchlorid,

B) 25-50 Gew.-Teile einer Mischung aus

B 1 : einem Pfropfpolymerisat, hergestellt durch Pfropfpolymerisation von
B 1.1 : 30-95 Gew.-Teilen eines Monomerengemisches aus Styrol, Methylmethacrylat, $\alpha$-Methylstyrol, einzeln oder in Abmischungen einerseits und Acrylnitril andererseits im Verhältnis 90 : 10 bis 60 : 40, auf
B 1.2 : 70-5 Gew.-Teile eines Butadien-Homo- oder Copolymerisates mit einem Comonomeranteil $\leqslant 35$ Gew.-%, das einen Gelgehalt $\geqslant 50$ % aufweist und wobei der eigentliche Pfropfkautschuk eine mittlere Teilchengröße von 0,05-5 $\mu$m aufweist und
B 2 : einem $\alpha$-Methyl-Styrol enthaltenden Copolymerisat, wobei als Comonomere Styrol, Acrylnitril und/oder Methylmethacrylat eingesetzt werden und wobei die Copolymerisate $\geqslant 30$ Gew.-% $\alpha$-Methylstyrol eingebaut enthalten,

C) 0-10 Gew.-Teile eines harzartigen, thermoplastischen Copolymerisates aus einem Styrol-Acrylnitril- bzw. Methylmethacrylat-Acrylnitril-Copolymeren, das einen Staudinger-Index $[\eta]$ von $\geqslant 3$, vorzugsweise 4 dl/g, besitzt und dessen $[\eta]$-Wert in jedem Fall über dem des in Grundpolymeren B) enthaltenden Copolymerisates liegt,

D) 5-40 Gew.-Teile eines Copolymerisates, das aufgebaut ist aus

D 1 : einem Ethylen-Vinylacetat- oder einem Ethylen-Acrylester-Copolymerisat mit einem Gehalt an polarer Komponente $\geqslant 50$ Gew.-% und mit mittleren Molekulargewichten $\geqslant 1\,500$ und/oder
D 2 : einem Ethylen-Vinylacetat-Kohlenmonoxid-Terpolymeren mit einem Gehalt an polarer Komponente $\geqslant 20$ Gew.-% und mit mittleren Molekulargewichten $\geqslant 1\,500$ und/oder
D 3 : einem Copolymerisat aus
D 3.1 : 10-99,9 Gew.-Teilen eines Acrylesters eines $C_1$-$C_{15}$-Alkohols,
D 3.2 : 0-90 Gew.-Teilen wenigstens eines di- oder polyfunktionellen Monomeren mit konjugierten oder unkonjugierten Doppelbindungen im Molekül und gegebenenfalls
D 3.3 : bis zu 40 Gew.-%, bezogen auf die Summe von D 1) und D 2), weiterer Monomerer wie Acrylnitril, Vinylacetat und/oder Methacrylsäurealkylestern von $C_1$-$C_8$-Alkoholen, mit mittleren Molekulargewichten $\geqslant 1\,500$ und

E) 3-30 Gew.-Teilen

E 1 : eines Copolymerisates, das hergestellt ist aus
E 1.1 : 60-95 Gew.-Teilen eines Monomeren mit zwei konjugierten olefinischen Doppelbindungen und/oder eines Acrylesters eines $C_1$-$C_8$-Alkohols,
E 1.2 : 5-40 Gew.-Teilen Styrol und/oder Acrylnitril und/oder Methacrylsäuremethylester, gegebenenfalls
E 1.3 : bis zu 10 Gew.-Teilen eines di- oder polyfunktionellen Monomeren oder Polymeren mit konjugierten oder nicht konjugierten Doppelbindungen und
E 1.4 : bis zu 30 Gew.-Teilen weiterer Monomerer wie Vinylacetat, (Meth)Acrylsäure oder Vinylether,
wobei die Komponente E 1 wenigstens in einem des Parameter : chemische Zusammensetzung Vernetzung, Gelgehalt, Quellungsindex oder Molekulargewicht von der Komponente D 3 verschieden sein, soll und wobei das Copolymerisat E 1 einen Gelgehalt von $\geqslant 70$ % aufweisen soll und/oder
E 2 : eines Ethylen-Propylen-Terpolymerisat-Kautschuk mit Gelgehalten $\geqslant 50$ %, wobei die Komponenten D) und E) gegebenenfalls als Pfropfpolymere von den die Komponente A bildenden Vinylchloridpolymeren auf die Polymere D und E als Pfropfgrundlage vorliegen können.

Bevorzugt geeignete Formmassen enthalten 25-50 Gew.-Teile Komponente A) 25-50 Gew.-Teile Komponente B), 1,5-3 Gew.-Teile Komponente C), 15-35 Gew.-Teile Komponenten D) und 5-20 Gew.-Teile Komponente E).

Der Staudinger-Index der Komponente C) wird in Dimethylformamid bei 25 °C gemessen.

Die Copolymerisate der Komponente D 3 sind unvernetzt bis teilvernetzt.

Unterscheidungsparameter für die Komponente E 1 sind beispielsweise chemische Zusammensetzung, Vernetzung, Gelgehalt usw.

Vinylchloridpolymerisate A) im Sinne der Erfindung sind vorzugsweise Polyvinylchlorid, Copolymerisate des Vinylchlorids mit bis zu 50 Gew.-%, vorzugsweise mit bis zu 20 Gew.-% copolymerisierbaren Verbindungen, sowie Pfropfpolymerisate von Vinylchlorid auf Ethylen-Vinylacetatcopolymerisate (z. B. mit Vinylacetatgehalten von 50 Gew.-%). Mit Vinylchlorid copolymerisierbare Verbindungen sind z. B. Vinylester mit 1-8 C-Atomen im Alkylrest der Carbonsäure, Vinylether mit 3-7 C-Atomen, Maleinsäureanhydrid, Halbester und Diester der Maleinsäure mit aliphatischen Alkoholen mit 1-8 C-Atomen im Alkoholrest.

Die B 1 Polymerisate im Sinne der Erfindung sind Pfropfprodukte die hergestellt werden durch Pfropfpolymerisation von

1) 30-95 Gew.-Teilen, vorzugsweise 60-95 Gew.-Teilen, eines Styrol-, Methylmethacrylat oder α-Methylstyrol-Acrylnitril-Monomergemisches im Gew.-Verhältnis 90 : 10 bis 60 : 40, vorzugsweise 75 : 25 bis 65 : 35 (besonders bevorzugt sind Monomergemische, die kein Methylmethacrylat und kein α-Methylstyrol enthalten), auf

2) 70-5 Gew.-Teile, insbesondere 10-50 Gew.-Teile eines Butadien-Homo- oder -Copolymerisates mit einem Comonomeranteil $\leqslant$ 35 Gew.-%, welches Gelgehalte $\geqslant$ 50 %, insbesondere $\geqslant$ 80 % aufweist, wobei der eigentliche Pfropfkautschuk eine mittlere Teilchengröße von 0,05-5 μm (insbesondere 0,1-0,5 μm) ($d_{50}$-Werte) besitzt. (Besonders bevorzugt sind Pfropfpolymerisate auf hochvernetzte Butadienhomopolymerisate einer Teilchengröße von 0,3-0,5 μm).

Das α-Methylstyrol enthaltende Copolymerisat B 2 der Komponente B besteht aus wenigstens 30 Gew.-%, vorzugsweise wenigstens 45 Gew.-%, α-Methylstyrol und 70 Gew.-%, vorzugsweise 30 Gew.-% copolymerisierbaren Monomeren wie Acrylnitril, Styrol, Chlorstyrol, Divinylbenzol, $C_1$-$C_6$-Alkylmethacrylat, Phenylmethacrylat, Vinylacetat, Maleinsäureanhydrid, Vinylalkylether. Diese enthalten 70 Gew.-%, vorzugsweise 55 Gew.-% Acrylnitril, gegebenenfalls in Mischung mit Styrol und Methylmethacrylat.

Die Copolymerisate der Komponente B 2 sollten eine Glasübergangstemperatur aufweisen die wenigstens so hoch ist wie die des Vinylchloridpolymerisates der Komponente A) oder die der Pfropfpolymeren des Pfropfproduktes B 1 oder die der thermoplastischen Harze C.

Besonders bevorzugt sind α-Methylstyrol-Harze mit höheren Glastemperaturen als die der obengenannten Formmassenkomponenten, z. B. α-Methylstyrol-Acrylnitril-Copolymerisate im Verhältnis 68 : 32 bis 72 : 28.

Harzartige, thermoplastische Copolymerisate im Sinne der Erfindung sind Styrol-Acrylnitril-Copolymerisate bzw. Methylmethacrylat-Acrylnitril-Copolymere, die einen Staudinger-Index [η] von $\geqslant$ 3, vorzugsweise 4 dl/g, aufweisen. Die Staudinger-Indices dieser Thermoplastkomponente müssen aber in jedem Fall höher sein als die Staudinger Indices der im Grundpolymeren B) enthaltenden Copolymerisate (d. h. der im Pfropfcopolymer enthaltenden Harzkomponenten). Besonders geeignet sind Methylmethacrylat-Acrylnitril-Copolymere als Komponente C mit 5-50 Gew.-% eingebautem Acrylnitril. Besonders bevorzugte Polymere C bestehen aus 25-40 Gew.-% Acrylnitril und 85-60 Gew.-% Methylmethacrylat. Sie besitzen einen unvernetzten Aufbau (erkenntlich an ihrer Löslichkeit in geeigneten organischen Lösungsmitteln z. B. Dimethylformamid (DMF)). Sie können gegebenenfalls kleinere Anteile von Methacrylsäureester von $C_2$-$C_8$-Alkoholen sowie Acrylsäureester von $C_1$-$C_6$-Alkoholen eingebaut enthalten.

Die Komponenten D) im Sinne der Erfindung können Copolymerisate darstellen aus :

D 1) 10-99,9 Gew.-Teilen (vorzugsweise 70-99,9 Gew.-Teilen) wenigstens eines Acrylesters eines $C_1$-$C_{15}$-Alkohols (vorzugsweise eines aliphatischen Alkohols). Besonders bevorzugt sind Butylacrylat, Hexylacrylat, Methylacrylat, Ethylacrylat, besonders bevorzugt ist Butylacrylat und Ethylhexylacrylat ;

D 2) 0-90 Gew.-Teilen (vorzugsweise 0-30 Gew.-Teilen) wenigstens eines bi- oder polyfunktionellen Monomeren mit konjugierten oder nicht konjugierten Doppelbindungen im Molekül (z. B. Divinylbenzol, Alkylendi(meth)acrylate, Triallyl(iso)cyanurat, Butadien, Isopren, Allyl(meth)acrylat) und gegebenenfalls

D 3) bis zu 40 Gew.-%, vorzugsweise bis zu 30 Gew.-%, bezogen auf die Summe von D 1) und D 2), weiterer Monomerer wie Acrylnitril, Vinylacetat und/oder Methacrylsäurealkylestern von $C_1$-$C_8$-Alkoholen wie Methylmethacrylat und Vinylacetat.

Diese Copolymerisate können unvernetzt oder partiell vernetzt vorliegen. Die in den Copolymerisaten vorliegenden löslichen Copolymeranteile sollen Molekulargewichte von 1 000-2 000 000 aufweisen, vorzugsweise Molekulargewichte $\geqslant$ 20 000. Besonders bevorzugt sind Copolymerisate der Komponente D), bestehend aus 5 bis 35 Gew.-Teilen Acrylnitril, gegebenenfalls im Gemisch mit Methylmethacrylat

4

0 101 903

und/oder Vinylacetat, 85-65 Gew.-Teilen Butylacrylat, gegebenenfalls im Gemisch mit Ethylhexylacrylat und 0-10 Gew.-Teilen polyfunktioneller Monomerer. Diese Produkte sind bevorzugt partiell vernetzt, besitzen Gelgehalte $\geq$ 30 % und Quellungsindices, gemessen in Dimethylformamid (DMF) im Bereich von 10-60, vorzugsweise im Bereich von 15-40.

Als Komponenten D sind weiterhin geeignet Ethylen-Vinylacetat- bzw. Acrylester-Copolymerisate mit einem Gehalt an polarer Komponente $\geq$ 50 %, vorzugsweise $\geq$ 60 % und mit mittleren Molekulargewichten $\geq$ 1 500, vorzugsweise $\geq$ 10 000, besonders bevorzugt $\geq$ 100 000.

Weiterhin geeignet sind Ethylen-Vinylacetat-Kohlenmonoxid-Terpolymere mit einem Gehalt an polarer Komponente $\geq$ 20 %.

Die Komponente E im Sinne der Erfindung kann ein Ethylen-Propylen-Terpolymerisat-Kautschuk mit nicht konjugierten Dienmonomeren als Termonomer wie Ethylidennorbornen, Dicyclopentadien oder Hexadien-1,4 sein. Ein solcher Kautschuk soll bevorzugt vernetzt vorliegen (Gelgehalte $\geq$ 50 Gew.-%).

Die Komponenten E) im Sinne der Erfindung können ebenso Copolymerisate sein aus :

E 1.1) 60-95 Gew.-Teilen (vorzugsweise 65-85 Gew.-Teilen) eines Monomeren mit konjugierten, olefinischen Doppelbindungen (z. B. Butadien, Isopren, Chloropren) und/oder eines Acrylesters eines $C_1$ bis $C_6$-Alkohols (z. B. Ethyl-, Butyl-, Hexylacrylat),

E 1.2) 5-40 Gew.-Teilen (vorzugsweise 15-35 Gew.-Teilen) Styrol und/oder Acrylnitril und/oder Methacrylsäuremethylester, gegebenenfalls,

E 1.3) bis zu 10 Gew.-Teilen eines vernetzend wirkenden di- oder polyfunktionellen Monomeren oder Oligomeren oder Polymeren mit konjugierten oder nicht konjugierten Doppelbindungen und

E 1.4) bis zu 30 Gew.-Teilen weiteren Monomeren wie Vinylacetat, (Meth)Acrylsäure, Vinylether, Methoxymethacrylamid, vorzugsweise Vinylacetat.

Derartige Copolymerisate sollen bevorzugt Gelgehalte $\geq$ 70 % aufweisen und in wenigstens einem Parameter (z. B. chemische Zusammensetzung, Vernetzung, Gelgehalt, Quellungsindex usw.) von Copolymerisat D 3) verschieden sein.

Bevorzugte Copolymerisate sind Copolymere aus 20 bis 35 Gew.-Teilen Acrylnitril, 80-65 Gew.-Teilen Butadien mit Gelgehalten $\geq$ 70 % oder Copolymerisate aus 15-35 Gew.-Teilen Acrylnitril, 85-65 Gew.-Teilen Acrylsäurealkylester und 0,4-10 Gew.-Teilen eines vernetzend wirkenden Agens (letztere können polyfunktionelle Vinyl- oder Allylmonomere sein, Butadien, Isopren, Dienoligomere, Polydiene, $C_2$-$C_{30}$-Alkylene mit endständigen polymerisierbaren Gruppen, wie (Meth)Acrylsäureester oder Polybutadienkerne in vernetzter Form, auf die Alkylacrylat im Gemisch mit Acrylnitril aufgepfropft wurden. Diese bevorzugten Copolymere können anteilmäßig Vinylacetat eingebaut enthalten.

Die Komponenten E 1) sollen sich wenigstens in einem Parameter von den Komponenten D 3) unterscheiden.

Die unterschiedliche Wirkung der Komponente E 1) und D 3) in der erfindungsgemäßen Komposition kann z. B. durch die chemische Zusammensetzung und die Stärke der Vernetzung (oder Nichtvernetzung) eingestellt werden (ausgedrückt durch Gelgehalt, Quellungsindex, Molekulargewicht des löslichen Anteils).

Liegen die Komponenten D) und E) in einer vernetzten, teilchenförmigen Form vor, so spielt bei bestimmten Produktzusammensetzungen auch die Teilchengröße eine bestimmte Rolle, z. B. für die Wirkung der Komponente E).

Die Komponenten D) und E) der erfindungsgemäßen Formmassen können natürlich auch dann zur Herstellung der erfindungsgemäßen Formmassen verwendet werden, wenn sie als spezielle Pfropfpolymere vorliegen (z. B. Pfropfpolymere von den die Komponente A bildenden Vinylchloridpolymeren auf die Polymere D und E als Pfropfgrundlage).

Die erfindungsgemäß geeigneten Vinylchloridpolymerisate können nach bekannten technischen Verfahren hergestellt werden (z. B. Emulsions-, Suspensions- bzw. Masse-Polymerisationsprozesse).

Zur Herstellung der geeigneten Polymerisate können Verfahren der Emulsions-, Suspensions- oder Fällungspolymerisationsprozesse herangezogen werden. Besonders geeignete Prozesse sind Emulsionspolymerisationen oder Kombinationen aus Emulsions- und Suspensionspolymerisationen.

Besonders bevorzugte Polymerisate werden erhalten, indem man in einer ersten Stufe ein Butadien-(copolymer)-kautschuk in wäßriger Emulsion (in Anwesenheit von Emulgatoren, Radikalbildnern, Reglern, etc.) radikalisch zu einem wäßrigen Latex einer Latexteilchengröße von ca. 0,05 bis 5 μm polymerisiert (gegebenenfalls in Kombination mit bekanntem Latexteilchenagglomerisationsverfahren).

In Gegenwart dieses Kautschuklatex werden dann die genannten Vinylmonomeren (z. B. Styrol, Acrylnitril, Methylmethacrylat) in einer zweiten Stufe polymerisiert.

Im Anschluß an die Pfropfpolymerisation werden Stabilisatoren (z. B. vom Phenoltyp) zugesetzt.

Die Polymerisate lassen sich nach bekannten Verfahren isolieren, z. B. durch Koagulation mittels Elektrolyte, Säuren oder organischen Lösungsmitteln. Anschließend werden die Produkte durch Trocknungsprozesse entwässert.

Als Herstellungsverfahren für erfindungsgemäß geeignete Copolymerisate B 2 lassen sich z. B. Harze einsetzen, die durch Emulsions- oder Massepolymerisationen erhalten werden. Im Anschluß an solche Polymerisationen können gegebenenfalls Antioxidantien (z. B. vom Phenoltyp) zugesetzt werden. Aus

5

den Pfropfpolymerlatices lassen sich die Polymerisate nach bekannten Verfahren isolieren (z. B. in Form von Pulvern) z. B. durch Koagulation durch Zusatz von Elektrolyten, Säuren oder organischen Lösungsmitteln. Die Rohprodukte können z. B. durch Trocknungsprozesse entwässert werden.

Die geeigneten Thermoplastzusätze C) können durch Emulsions- oder Suspensionsverfahren in Gegenwart von bekannten oberflächenaktiven Substanzen und Initiatoren, z. B. Radikalbindnern hergestellt werden. Man kann solche Polymere entweder aus der anfallenden Latexform isolieren (z. B. durch Sprühtrocknung) oder die anfallenden Latices der erfindungsgemäßen Kompositionsbestandteile z. B. mit dem ABS-Latex und/oder dem Butadien-Acrylnitril-Latex (der Komponente E) und/oder mit Latices der Ethylen-Polymerisate D), falls diese als Latex erhältlich sind, vermischen und gemeinsam koagulieren.

Solche sogenannten Co-Koagulations-Verfahren führen zu besonders bevorzugten Komponentenmischungen (als Bestandteile der erfindungsgemäßen Komposition). Sie sind Formmassen mit besonderen, guten Eigenschaften.

Die erfindungsgemäß geeigneten Komponenten D) können nach bekannten Verfahren durch radikalische Copolymerisationsprozesse hergestellt werden (z. B. Emulsionspolymerisationen, Lösungs-, Masse- oder Suspensionspolymerisationen sowie Kombinationen aus Emulsions- und Suspensionspolymerisationen). Besonders bevorzugt ist die Verfahrensweise der wäßrigen Emulsionspolymerisation und der Lösungspolymerisation. Die Polymerisate werden im Anschluß an den Herstellprozeß nach bekannten Verfahren isoliert (z. B. durch Filtration, Koagulation, Eindampfverfahren, vorzugsweise durch Koagulation von Emulsionen).

Ebenso wie bei den anderen Komponenten der erfindungsgemäßen Formmassen können die Einzelkomponenten während oder nach dem Herstellprozeß mit üblichen Antioxidantien, Thermostabilisatoren oder Lichtschutzmitteln ausgerüstet bzw. stabilisiert werden.

Die Komponenten E) werden vorzugsweise so hergestellt, daß eine unproblematische Vernetzung des Materials auf Gelgehalte $\geq$ 70 % möglich ist. Ein bevorzugtes Herstellverfahren für E) stellt z. B. die Emulsionspolymerisation dar (z. B. die in wäßrigen Medien). Bei anderen Herstellungsverfahren kann man z. B. eine Lösungspolymerisation durchführen (unter Ausbildung eines im wesentlichen unvernetzten Materials) und anschließend durch Einwirkung von Vernetzern die notwendige Vernetzung herbeiführen (gegebenenfalls in Substanz oder nach Dispergierung des durch Lösungspolymerisation erhaltenen Vorkondensates). Bei solchen Verfahren können übliche Radikalbildner sowie auch geeignete Strahlen Verwendung finden.

Ein besonders geeignetes Verfahren stellt die wäßrige Emulsionspolymerisation mit anschließender Koagulation der anfallenden wäßrigen Latices dar.

Die erfindungsgemäßen Formmassen können nach üblichen Methoden der Kunststoffverarbeitung verarbeitet werden. Beispielsweise können durch Spritzguß, Extrusion, Hohlkörperblasen, Tiefziehen, Kalandrieren, Formkörper hergestellt werden. Besonders eignen sich die Formmassen zur Herstellung von Folien. Die Formkörper weisen eine verbesserte Wärmeformbeständigkeit auf und können somit höheren Temperaturbelastungen ausgesetzt werden.

Die Grenzviskositäten (Staudinger-Indices) wurden in dem jeweiligen angegebenen Lösungsmittel bestimmt. Zur Definition des Staudinger-Index, Quellungsindex, Gelgehalt siehe M. Hoffmann, H. Krömer, R. Kuhn, « Polymeranalytik I und II » Georg Thieme Verlag (Stuttgart) (1977).

Die Pfropfkautschukteilchengrößen sind $d_{50}$-Werte (Durchmesser) (zur Definition siehe Ultrazentrifugen-Messungen : W. Scholtan, H. Lange, Kolloidz. und Z. Polymere 250 (1972) 783 bis 796).

Beispiele

Zur Herstellung der in Tabelle 2 beschriebenen Formmassen werden x Gew.-Teile Polyvinylchlorid (K-Wert 70) mit unterschiedlichen Mengen verschiedener Produkte (Tabelle 1) kombiniert. Als notwendiger Stabilisator- und Gleitmittelzusatz wurden in jedem Fall 2 Gew.-% Ba/Cd Laurat (fest), 0,3 Gew.-% sterisch gehindertes phenolisches Antioxidans (fest) und 0,2 Gew.-% Esterwachs zugesetzt. Die Formmassen wurden auf einem Mischwalzwerk 10 Minuten bei 180 °C homogenisiert und bei 190 °C zu Prüfkörpern verpreßt.

Tabelle 1

Eingesetzte Polymerisate

Produkt 1.1 : Mischung aus 94 Gew.-Teilen eines Acrylnitril-Butadien-Styrol-(ABS)-Polymerisates und 6 Gew.-Teilen eines Methylmethacrylat-Acrylnitril-Copolymerisates, enthaltend 32 Gew.-% Acrylnitril, mit einem Staudinger-Index von 5 dl/g (in DMF bei 25 °C) ; das ABS-Polymerisat, hergestellt durch Emulsionspolymerisation, enthält 30 Gew.-% Polybutadien mit einem Gelgehalt von 70 % und einer Teilchengröße von 0,4 μ.

Produkt 1.2 : Das Polymerisat besteht aus 31 Gew.-% α-Methylstyrol und 69 Gew.-% Acrylnitril und besitzt einen Staudinger-Index, gemessen in Dimethylformamid (MDF) bei 25 °C, von 0,74.

Produkt 1.3 : Das Polymerisat besteht aus 25 Gew.-% eines ABS-Polymerisates und 75 Gew.-Teilen

eines α-Methylstyrolcopolymerisates der gleichen Zusammensetzung wie das Produkt 1.2 ; das ABS-Polymerisat besteht aus 50 Gew.-Teilen Styrol-Acrylnitril (SAN)-Harz und aus 50 Gew.-Teilen Polybutadien mit einer Kautschukteilchengröße von 0,4 μ.

Produkt 1.4 : Das Polymerisat besteht aus 10 Gew.-Teilen Acrylnitril, 55,5 Gew.-Teilen Methylmethacrylat und 34,5 Gew.-Teilen α-Methylstyrol und weist einen Staudinger-Index, in DMF bei 25 °C, von 0,58 auf.

Produkt 1.5 : Das Polymerisat besteht aus 70 Gew.-% Vinylacetat und 30 Gew.-% Ethylen und besitzt ein durchschnittliches Molekulargewicht von 200 000.

Produkt 1.6 : Das Polymerisat besteht aus 6 Gew.-% Kohlenmonoxid, 24 Gew.-% Vinylacetat und 70 Gew.-% Ethylen und weist ein durchschnittliches Molekulargewicht von 150 000 auf.

Produkt 1.7 : Durch Emulsionspolymerisation bei 65 °C wird entsprechend folgender Gesamtrezeptur ein Latex erhalten, aus dem durch Koagulation mit $MgSO_4$ ein kautschukartiges Polymer erhalten wird :

```
2 950 Gew.-Teile Wasser
   35 Gew.-Teile Na-C14-C16-Alkylsulfonat
    2 Gew.-Teile Kaliumperoxidisulfat
  1,0 Gew.-Teile Triallylcyanurat
  158 Gew.-Teile Acrylnitril
```

Das Polymer weist einen Gelgehalt von 63 (in DMF) auf und einen Quellungsindex von 40.

Produkt 1.8 : Durch Emulsionspolymerisation bei 65 °C wird entsprechend folgender Gesamtrezeptur ein Latex erhalten, aus dem durch Koagulation mit $MgSO_4$ ein kautschukartiges Polymer erhalten wird :

```
2 585 Gew.-Teile Wasser
   27 Gew.-Teile C14-C16-Alkylsulfonat
    2 Gew.-Teile Kaliumperoxidisulfat
1 182 Gew.-Teile Butylacrylat
  393 Gew.-Teile Acrylnitril
    4 Gew.-Teile Triallylcyanurat
```

Das Polymer weist einen Gelgehalt (in DMF) von 92 auf und besitzt einen Quellungsindex von 19.8.

Produkt 1.9 : Das Polymerisat besteht aus 29 Gew.-% Acrylnitril und 71 Gew.-% Butadien, stellt ein Emulsionspolymerisat dar, und weist einen Gelgehalt von > 60 % auf.

Tabelle 2

| Beispiel 1 | | Beispiel 2 | | Beispiel 3 | | Beispiel 4 | | Beispiel 5 | |
|---|---|---|---|---|---|---|---|---|---|
| Prod. | Gew.-Teile | Prod. | Gew.-Teile | Prod. | Gew.-Teile | Prod. | Gew.-Teile | Prod. | Gew.-Teile |
| PVC | 30 | PVC | 30 | PVC | 30 | PVC | 30 | PVC | 30 |
| 1.1 B1 + G | 25 | 1.1. B1 + G | 25 | 1.1. B1 + G | 25 | 1.1. B1 + G | 25 | 1.1 B1 + G | 25 |
| 1.2. B2 | 15 | 1.2 B2 | 15 | 1.4 B2 | 15 | 1.3. B2 + B1 | 15 | 1.4 B2 | 15 |
| IPDI* | 22 | 1.5 D1 | 37 | 1.6 D2 | 35 | 1.7 D3 | 40 | 1.7 D3 | 40 |
| 1.9 E1 | 8 | 1.8 E1 | 8 | 1.8 E1 | 10 | 1.9 E1 | 10 | 1.8 E1 | 10 |
| Zugfestigk. MPA DIN 53455 | 20,7 | | 23,7 | | 22,1 | | 23,2 | | 22,7 |
| Dehnung % DIN 53455 | 202 | | 234 | | 226 | | 245 | | 210 |
| Vicat-Wert °C DIN 53460, Verf. A | 86 | | 89 | | 86 | | 92 | | 92 |
| Shore-Härte D DIN 53505 | 53 | | 54 | | 54 | | 56 | | 57 |
| Weitreißfestigk. N/mm DIN 53515 | 62 | | 72 | | 65 | | 78 | | 70 |
| Dehnung nach Alterung (120 °C, 21 d) DIN 53455 | 4 | | 178 | | 155 | | ·132 | | 180 |

* Diisodecylphthalat

Wie aus der Tabelle 2 hervorgeht, besitzen die Formmassen der erfindungsgemäßen Zusammensetzung ein hervorragendes Alterungsverhalten und zusätzlich eine erhöhte Wärmeformbeständigkeit (Vicat-Wert).

**Patentansprüche**

1. Thermoplastische Formmassen aus

A) 25-50 Gew.-Teilen eines Vinylchloridhomo- oder -copolymerisates mit mindestens 80 Gew.-% Vinylchlorid,

B) 25-50 Gew.-Teilen einer Mischung aus

B 1 : einem Pfropfpolymerisat, hergestellt durch Pfropfpolymerisation von
— B 1.1 : 30-95 Gew.-Teilen eines Monomerengemisches aus Styrol, Methylmethacrylat, $\alpha$-Methylstyrol, einzeln oder in Abmischungen einerseits und Acrylnitril andererseits im Verhältnis 90 : 10 bis 60 : 40, auf
— B 1.2 : 70-5 Gew.-Teile eines Butadien-Homo- oder Copolymerisates mit einem Comonomeranteil $\leqslant$ 35 Gew.-%, das einen Gelgehalt $\geqslant$ 50 % aufweist und wobei der eigentliche Pfropfkautschuk eine mittlere Teilchengröße von 0,05-5 $\mu$m aufweist, und
B 2 : einem $\alpha$-Methyl-Styrol enthaltenden Copolymerisat, wobei als Comonomere Styrol, Acrylnitril und/oder Methylmethacrylat fungieren und wobei die Copolymerisate $\geqslant$ 30 Gew.-% $\alpha$-Methylstyrol eingebaut enthalten,

C) 0-10 Gew.-Teilen eines harzartigen, thermoplastischen Copolymerisates aus einem Styrol-Acrylnitril- bzw. Methylmethacrylat-Acrylnitril-Copolymeren, das einen Staudinger-Index [$\eta$] von $\geqslant$ 3 dl/g, besitzt und dessen [$\eta$]-Wert in jedem Fall über dem des in Grundpolymeren B) enthaltenden Copolymerisates liegt,

D) 5-40 Gew.-Teilen eines Copolymerisates, das aufgebaut ist aus

D 1 : einem Ethylen-Vinylacetat- oder einem Ethylen-Acrylester-Copolymerisat mit einem Gehalt an polarer Komponente $\geqslant$ 50 Gew.-% und mit mittleren Molekulargewichten $\geqslant$ 1 500 und/oder
D 2 : einem Ethylen-Vinylacetat-Kohlenmonoxid-Terpolymeren mit einem Gehalt an polarer Komponente $\geqslant$ 20 Gew.-% und mit mittleren Molekulargewichten $\geqslant$ 1 500 und/oder
D 3 : einem Copolymerisat aus
— D 3.1 : 10-99,9 Gew.-Teilen eines Acrylesters eines $C_1$-$C_{15}$-Alkohols,
— D 3.2 : 0-90 Gew.-Teilen wenigstens eines di- oder polyfunktionnellen Monomeren mit konjugierten oder unkonjugierten Doppelbindungen im Molekül und gegebenenfalls
— D 3.3 : bis zu 40 Gew.-%, bezogen auf die Summe von D 3.1) und D 3.2), weiterer Monomerer wie Acrylnitril, Vinylacetat und/oder Methacrylsäurealkylestern von $C_1$-$C_8$- Alkoholen, mit mittleren Molekulargewichten $\geqslant$ 1 500, und

E) 3-30 Gew.-Teilen

E 1 : eines Copolymerisates, das hergestellt ist aus
— E 1.1 : 60-95 Gew.-Teilen eines Monomeren mit zwei konjugierten olefinischen Doppelbindungen und/oder eines Acrylesters eines $C_1$-$C_6$-Alkohols,
— E 1.2 : 5-40 Gew.-Teilen Styrol und/oder Acrylnitril und/oder Methacrylsäuremethylester, gegebenenfalls
— E 1.3 : bis zu 10 Gew.-Teilen eines di- oder polyfunktionnellen Monomeren oder Polymeren mit konjugierten oder nicht konjugierten Doppelbindungen und
— E 1.4 : bis zu 30 Gew.-Teilen weiterer Monomerer wie z. B. Vinylacetat, (Meth)Acrylsäure oder Vinylether,
wobei die Komponente E 1 wenigstens in einem der Parameter : chemische Zusammensetzung, Vernetzung, Gelgehalt, Quellungsindex oder Molekulargewicht von der Komponente D 3 verschieden sein soll und wobei das Copolymerisat E 1 einen Gelgehalt von $\geqslant$ 70 % aufweisen soll, und/oder
E 2 : eines Ethylen-Propylen-Terpolymerisat-Kautschuk mit Gelgehalten $\geqslant$ 50 %, wobei die Komponenten D) und E) gegebenenfalls als Pfropfpolymere von den die Komponente A bildenen Vinylchloridpolymeren auf die Polymere D und E als Pfropfgrundlage vorliegen können.

2. Verwendung von thermoplastischen Formmassen nach Anspruch 1 zur Herstellung von Folien.

# 0 101 903

**Claims**

1. Thermoplastic moulding compositions of

A) 25-50 parts by weight of a vinyl chloride homo- or copolymer containing at least 80 % by weight of vinyl chloride,

B) 25-50 parts by weight of a mixture of

B 1 : a graft polymer, produced by graft polymerisation of

— B 1.1 : 30-95 parts by weight of a monomer mixture of styrene, methyl methacrylate, α-methyl styrene, individually or as mixtures, on the one hand, and acrylonitrile, on the other hand, in a ratio of 90 : 10 to 60 : 40, on to

— B 1.2 : 70-5 parts by weight of a butadiene homo- or copolymer having a comonomer content of ≤ 35 % by weight and a gel content of ≥ 50 %, the actual graft rubber having an average particle size of 0.05-5 μm, and

B 2 : a copolymer containing α-methyl styrene, styrene, acrylonitrile and/or methyl methacrylate serving as comonomers and the copolymers containing ≥ 30 % by weight of incorporated α-methyl styrene,

C) 0-10 parts by weight of a resin-like, thermoplastic copolymer of a styrene/acrylonitrile or methyl methacrylate/acrylonitrile copolymer which has a Staudinger index [η] of ≥ 3 dl/g, and the [η] value of which is in any case higher than that of the copolymer contained in basic polymer B),

D) 5-40 parts by weight of a copolymer which is composed of

D 1 : an ethylene/vinyl acetate or an ethylene/acrylic ester copolymer, having a content of polar component of ≥ 50 % by weight and average molecular weights of ≥ 1 500 and/or

D 2 : an ethylene/vinyl acetate/carbon monoxide terpolymer having a content of polar component of ≥ 20 % by weight and average molecular weights of ≥ 1 500 and/or

D 3 : a copolymer of

— D 3.1 : 10-99.9 parts by weight of an acrylic ester of a $C_1$-$C_{15}$ alcohol,

— D 3.2 : 0-90 parts by weight of at least one di- or polyfunctional monomer containing conjugated or unconjugated double bonds in the molecule and, optionally,

— D 3.3 : up to 40 % by weight, based on the sum of D 3.1) and D 3.2), of other monomers such as acrylonitrile, vinyl acetate and/or methacrylic acid alkyl esters of $C_1$-$C_8$ alcohols, having average molecular weights of ≥ 1 500, and

E) 3-30 parts by weight of

E 1 : a copolymer which is produced from

— E 1.1 : 60-95 parts by weight of a monomer containing two conjugated olefinic double bonds and/or of an acrylic ester of a $C_1$-$C_6$ alcohol,

— E 1.2 : 5-40 parts by weight of styrene and/or acrylonitrile and/or methyl methacrylate, optionally

— E 1.3 : up to 10 parts by weight of a di- or polyfunctional monomer or polymer containing conjugated or non-conjugated double bonds and

— E 1.4 : up to 30 parts by weight of other monomers such as for example vinyl acetate, (meth)acrylic acid of vinyl ethers,

wherein component E 1 should be different from component D 3 in at least one of the parameters : chemical composition, cross-linkage, gel content, swelling index or molecular weight and wherein copolymer E 1 should have a gel content of ≥ 70 %, and/or

E 2 : an ethylene/propylene terpolymer rubber having gel contents of ≥ 50 %, it being possible for components D) and E) optionally to be present as graft polymers of the vinyl chloride polymers forming component A, on polymers D and E as the graft substrate.

2. Use of thermoplastic moulding compositions according to Claim 1 for the production of films.

**Revendications**

1. Mélanges à mouler thermoplastiques constitués de

A) 25 à 50 parties en poids d'un homopolymère ou d'un copolymère de chlorure de vinyle contenant au moins 80 % en poids de chlorure de vinyle,

B) 25-50 parties en poids d'un mélange

B 1 : d'un produit de polymérisation greffé, obtenu par polymérisation de greffage de

9

— B 1.1 : 30-95 parties en poids d'un mélange de monomères formé de styrène, de méthacrylate de méthyle, d'α-méthylstyrène, individuellement ou en mélanges, d'une part, et d'acrylonitrile, d'autre part, dans un rapport de 90 : 10 à 60 : 40, sur

— B 1.2 : 70-5 parties en poids d'un homopolymère ou d'un copolymère de butadiène avec une proportion de comonomère inférieure ou égale à 35 % en poids, qui présente une teneur en gel supérieure ou égale à 50 % et dans lequel le caoutchouc de greffage proprement dit a une grosse moyenne de particules de 0,05 à 5 μm, et

B 2 : d'un produit de copolymérisation contenant de l'α-méthylstyrène, dans lequel le styrène, l'acrylonitrile et/ou le méthacrylate de méthyle ont la fonction de comonomères et les produits de copolymérisation contiennent 30 ou plus de 30 % en poids d'α-méthylstyrène incorporé,

C) 0-10 parties en poids d'un copolymère thermoplastique du type d'une résine, constitué d'un copolymère styrène-acrylonitrile ou méthacrylate de méthyle-acrylonitrile qui possède un indice de Staudinger [η] supérieur ou égal à 3 dl/g et dont la valeur [η] se situe dans chaque cas au-dessus de celle du produit de copolymérisation contenu dans les polymères de base B),

D) 5-40 parties en poids d'un produit de copolymérisation qui est constitué

D 1 : d'un copolymère éthylène-acétate de vinyle ou d'un copolymère éthylène-ester acrylique avec une teneur en composant polaire supérieure ou égale à 50 % en poids et ayant des poids moléculaires moyens supérieurs ou égaux à 1 500 et/ou

D 2 : d'un terpolymère éthylène-acétate de vinyle-oxyde de carbone ayant une teneur en composant polaire supérieure ou égale à 20 % en poids et avec des poids moléculaires moyens supérieurs ou égaux à 1 500 et/ou

D 3 : d'un produit de copolymérisation

— D 3.1 : de 10-99,9 parties en poids d'un ester acrylique d'un alcool en $C_1$ à $C_{15}$,

— D 3.2 : de 0 à 90 parties en poids d'au moins un monomère difonctionnel ou polyfonctionnel à doubles liaisons conjuguées ou non conjuguées dans la molécule et, le cas échéant,

— D 3.3 : jusqu'à 40 % en poids, par rapport à la somme de D 3.1) et de D 3.2), d'autres monomères tels que l'acrylonitrile, l'acétate de vinyle et/ou des esters alkyliques d'acide méthacrylique d'alcools en $C_1$ à $C_8$, avec des poids moléculaires moyens supérieurs ou égaux à 1 500, et

E) 3-30 parties en poids

E 1 : d'un produit de copolymérisation qui est préparé à partir

— E 1.1 : de 60 à 95 parties en poids d'un monomère à deux doubles liaisons oléfiniques conjuguées et/ou d'un ester acrylique d'un alcool en $C_1$ à $C_6$,

— E 1.2 : de 5 à 40 parties en poids de styrène et/ou d'acrylonitrile et/ou d'ester méthylique d'acide méthacrylique, le cas échéant

— E 1.3 : jusqu'à 10 parties en poids d'un monomère difonctionnel ou polyfonctionnel ou d'un polymère à doubles liaisons conjuguées ou non conjuguées et

— E 1.4 : jusqu'à 30 parties en poids d'autres monomères tels que l'acétate de vinyle, l'acide (meth)acrylique ou l'éther de vinyle,

le composant E 1 devant être différent du composant D 3 par l'un des paramètres : composition chimique, réticulation, teneur en gel, indice de gonflement ou poids moléculaire et le produit de copolymérisation E 1 devant avoir une teneur en gel supérieure ou égale à 70 %, et/ou

E 2 : d'un caoutchouc terpolymère éthylène-propylène avec des teneurs en gel supérieures ou égales à 50 %, les composants D) et E) pouvant exister éventuellement comme polymères de greffage des polymères de chlorure de vinyle formant le composant A sur les polymères E et E en tant que support de greffage.

2. Utilisation de mélanges à mouler thermoplastiques suivant la revendication 1 pour la production de feuilles.